**Europäisches Patentamt**

**European Patent Office**

**Office européen des brevets**

(19)

(11) Publication number: **0 157 896**
**A1**

(12) # EUROPEAN PATENT APPLICATION

(21) Application number: **84104108.0**

(22) Date of filing: **12.04.84**

(51) Int. Cl.⁴: **A 23 G 1/10**
**A 23 G 1/06**

(43) Date of publication of application:
**16.10.85 Bulletin 85/42**

(84) Designated Contracting States:
**AT BE CH DE FR GB IT LI LU NL SE**

(71) Applicant: **Hermann Bauermeister Maschinenfabrik G.m.b.H.**
**Friedensallee 44**
**D-2000 Hamburg 50(DE)**

(72) Inventor: **Rix, Wilfried, Dipl.-Ing.**
**Birkenweg 9a**
**D-2000 Hamburg 65(DE)**

(72) Inventor: **Teschner, Klaus, Dipl.-Ing.**
**Beisserstrasse 10**
**D-2000 Hamburg 63(DE)**

(74) Representative: **von Raffay, Vincenz, Dipl.-Ing. et al,**
**Patentanwälte Raffay, Fleck & Partner Postfach 32 32 17**
**D-2000 Hamburg 13(DE)**

(54) **Process and apparatus for pre-grinding oil seeds, particularly cacao seeds.**

(57) Das erfindungsgemäße Verfahren und die entsprechende Vorrichtung zum Vorvermahlen von fetthaltigen Samenkernen, insbesondere Kakaokerngut, arbeitet nicht, wie nach einem bekannten Verfahren vorgeschlagen, unter Vakuum, um für eine Entfeuchtung und Entgasung und eine gleichzeitige Külung zu sorgen, sondern durch Zuführung von erwärmter Luft in die Mahlvorrichtung. Hierdurch wird nicht nur die erwünschte gute Entfeuchtung und Entgasung sichergestellt, sondern die erzeugte Kakaomasse tritt mit einer verhältnismäßig hohen Temperatur im Bereich von über 100° C aus, und es ist eine sehr wirtschaftliche, energiesparende unmittelbare Weiterverarbeitung möglich. Hierdurch wird das Aufheizen der Masse von einer agertemperatur von beispielsweise 40° C vermieden. In vorteilhafter Weise wird die Luft, die aus der Mahlvorrichtung austritt und unter Berücksichtigung des verhältnismäßig großen Volumens noch relativ warm ist, dazu verwendet, die aus der Umgebung zugeführte Luft in einem Wärmetauscher zu erwärmen. Wenn aus verfahrenstechnischen Gründen zeitweilig die Zuführung der erzeugten Kakaomasse zu einer Zwischenlagerung erforderlich ist und damit eine Kuhlung notwendig wird, kann diese Kuhlung wiederum durch die aus der Umgebung zugefuhrte Luft erfolgen, die dadurch gleichzeitig erwärmt wird. Die Heizvorrichtung fur die Luft dient in jedem Falle nur dazu, die Energie aufzubringen, die in dem oder den Wärmetauschern nicht aufgebracht wird.

./...

**RAFFAY, FLECK & PARTNER**
P A T E N T A N W Ä L T E
EUROPEAN PATENT ATTORNEYS

P O S T F A C H  32 32 17
D-2000 H A M B U R G  13

DIPL.-ING.  VINCENZ  v.  RAFFAY
DIPL.-CHEM.  DR.  THOMAS  FLECK
HAMBURG

DIPL.-CHEM.  DR.  HANS  D.  BOETERS
DIPL.-ING.  ROBERT  BAUER
MÜNCHEN

KANZLEI:
GEFFCKENSTRASSE 6
TELEFON: (040) 47 80 23
TELEGRAMME: PATFAY, HAMBURG
TELEX 2 164 631 paty d

01578936

10. April 1984

Firma

Hermann Bauermeister

Maschinenfabrik G.m.b.H.

2ooo Hamburg 50

Friedensallee 44

UNSERE AKTE: 2438/18

Verfahren und Vorrichtung zur Vorvermahlung
von fetthaltigen Samenkernen, insbesondere
Kakaokerngut

Die Erfindung betrifft ein Verfahren und
eine Vorrichtung zur Vorvermahlung von fetthaltigen
Samenkernen, insbesondere Kakaokerngut in einer
Mahlvorrichtung, aus der die Masse ausgetragen
wird.

Unter Vorvermahlung, insbesondere von
Kakaokerngut, wird im Sinne dieser Erfindung eine
Vermahlung von grobkörnigen, geschälten ungerösteten
oder auch gerösteten Kakaobohnen verstanden.

Es ist nun ein Verfahren bekannt, bei
dem das Mahlgut unter Vakuum bei einer Temperatur von
ca. 80° C bis 100° C vermahlen wird, d.h. es findet
eine Entfeuchtung und ein gleichzeitiger Entzug
anderer leicht flüchtiger Bestandteile durch Anlegen von Vakuum statt. Die Vermahlung unter Vakuum findet nicht nur statt, um eine Entfeuchtung bzw. Entgasung zu ermöglichen, sondern um sicherzustellen, daß die Temperatur nicht über 100° C ansteigt. Oberhalb dieser Temperatur können Aromaschäden durch Überhitzung des Mahlgutes auftreten (EP 00 18 607). Dies gilt besonders, wenn Kakaomassen mit Temperaturen oberhalb 100° C längere Zeit zwischengelagert werden. In diesen Fällen muß die Masse mit hohem Energieaufwand auf Lagertemperatur gekühlt werden.

Der Erfindung liegt nun die Aufgabe zugrunde, ein Verfahren und eine Vorrichtung der eingangs genannten Art zu schaffen, durch das nicht nur die erwünschte Entfeuchtung und Entgasung auch bei hohem Feuchtigkeitsgehalt des zu vermahlenden Gutes sicher durchgeführt wird, sondern die erzeugte Masse soll möglichst wirtschaftlich und möglichst unmittelbar einer Weiterverarbeitung, der Masseröstung und/ oder Weiterveredelung zugeführt werden.

Diese Aufgabe wird durch das Kennzeichen des Anspruches 1 vorzugsweise in dem in Anspruch 2 angegebenen Temperaturbereich gelöst. Vorteilhafte Ausgestaltungen sind Gegenstand der weiteren Ansprüche.

Bei dem bekannten Verfahren wird die Temperatur durch die Vakuumbehandlung bewußt niedrig gehalten, um einen unkontrollierten Rösteffekt der Masse und damit Aromaschäden zu vermeiden. Die Erfindung geht einen vollständig anderen Weg, sie nimmt eine höhere Erwärmung bewußt in Kauf, um die erzeugte Masse vorzugsweise unmittelbar nach der Vorvermahlung einer Masseröstung und/oder Weiterveredelung zuzuführen. Bei einer solchen Verarbeitung muß die Masse ohnehin auf über 100° C, vorzugsweise zwischen 105° C und 130° C aufgeheizt werden. Erfindungsgemäß wird daher Heißluft zugeführt, um die gewünschte Temperatur der erzeugten Masse zu erreichen und gleichzeitig für Entfeuchtung und Entgasung zu sorgen. Wenn die Luftmenge entsprechend groß ist, nimmt die erzeugte Masse etwa die Temperatur der Luft an, d.h. vorzugsweise in einem Bereich oberhalb 100° C.

Anders als die bekannten Verfahren, die immer von einer Kühlung ausgehen, arbeitet die Erfindung mit vorgewärmter Luft mit einem entsprechend großen Volumen. Die erzeugte Masse wird der Weiterverarbeitung zugeführt. In vorteilhafter Weise wird die austretende Luft verwendet, um die in die Mahlvorrichtung eingeführte Heißluft vorzuwärmen.

Wenn beispielsweise wegen Betriebsunterbrechung oder dgl. die erzeugte Masse nicht unmittelbar der Dünnschichtweiterverarbeitung zugeführt werden kann, ist auch eine Zwischenlagerung möglich. Diese muß dann bei einer niedrigeren Temperatur erfolgen, um eine Aromaschädigung und dgl. zu vermeiden. Die Kühlung der Masse auf dem Wege zur Zwischenlagerung kann verwendet werden, um in einem entsprechenden Wärmetauscher die Luft, die in die Mahlvorrichtung eingeführt wird, zu erwärmen.

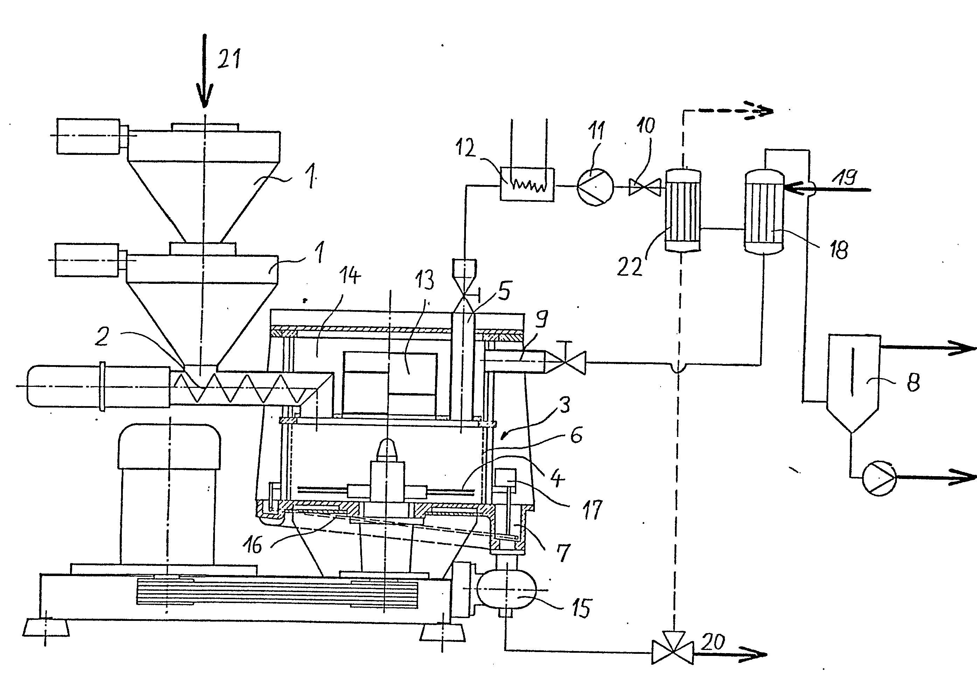

Im folgenden wird die Erfindung unter Hinweis auf die Zeichnung anhand eines Ausführungsbeispieles näher erläutert:

In der einzigen Figur ist eine Vorrichtung schematisch dargestellt. Diese Vorrichtung besteht aus einer Schieberschleuse 1, in die das Kakaokerngut bei 21 eintritt. Eine Speiseschnecke 2 fördert das Kakaokerngut in die Mahlvorrichtung 3. Die Mahlvorrichtung ist gegen die Atmosphäre abgeschlossen, um einen geringen Überdruck und ggf. einen Unterdruck im Mahlraum zu ermöglichen.

In der Mahlvorrichtung 3, bei der es sich bei der dargestellten Ausführungsform um eine Schlagmessermühle handelt, zerkleinern rotierende Messer 4, die mit einem entsprechenden starken Antrieb zusammenarbeiten, die Kakaokerne in der gewünschten Weise. Die entsprechend zerkleinerten Bestandteile werden gegen ein Sieb 6 geschleudert, durch das sie, wenn sie entsprechend klein genug sind, hindurchtreten. Das Mahlgut, das dann als Masse bezeichnet wird, sammelt sich in einem Ringkanal 7. Das Abfließen der Masse aus dem Ringkanal 7 wird durch einen Vibrationsring 16 mit einem Antrieb 17 unterstützt. Eine Massepumpe 15 sorgt für die Abförderung.

Bei 5 tritt die erwärmte Luft, die auch als Heißluft bezeichnet werden kann, in den Mahlraum ein. Der Austritt ist mit 9 bezeichnet.

Die zu erwärmende Luft wird der Umgebung bei 19 entnommen und einem Wärmetauscher 22 zugeführt. Transportiert wird die Luft mit Hilfe eines Ventilators 11. Eine Drosselstelle 10 sorgt für eine entsprechende Regelung. Mit 12 ist eine Heizvorrichtung bezeichnet, die mit einer entsprechenden Feinregelung versehen ist.

Die bei 9 austretende Luft ist verhältnismäßig warm. Diese wird dazu verwendet, in dem Wärmetauscher 22 die aus der Umgebung angesaugte Luft zu erwärmen, so daß möglichst wenig zusätzliche Energie in der Heizvorrichtung 12 zugeführt werden muß.

Die bei 9 austretende Luft gelangt aus dem Wärmetauscher 22 dann in einen Abscheider 8 (z.B. einen Sprühkondensator), in dem die Luft gereinigt und so unter den Gesichtspunkten einer sauberen Umwelt ins Freie abgeblasen werden kann.

Um ein Herausreißen von kleinen Mahlgutteilchen oder freiwerdender Butter zu vermeiden, ist

- 5 -

0157896

oberhalb des Mahlraumes ein Abscheider 13 eingebaut, in dem die schwebenden Teile zurückgehalten
werden. Der Abscheider 13 mündet in einem Entspannungsraum 14, in dem die austretende Luft sich beruhigt (Abbau der Luftgeschwindigkeit, Vergleichmäßigung
der Luftströmung) bevor diese bei 9 austritt.

Wenn es aus verfahrenstechnischen Gründen
nicht möglich ist, die bei 20 mit verhältnismäßig
hoher Temperatur austretende Kakaomasse unmittelbar
einer Weiterverarbeitung zuzuführen, so ist eine Zwischenlagerung bei entsprechend niedrigerer Temperatur erforderlich. Die Masse muß dann auf unter 80° C heruntergekühlt werden. Dieses geschieht vorzugsweise in
einem Wärmetauscher 18, in dem die durch den Ventilator
11 angesaugte Luft als Kühlmedium verwendet und damit
erwärmt wird.

Insbesondere dann, wenn die erzeugte
Kakaomasse einer Weiterverarbeitung z.B. einer Masseröstung oder einer Masseveredelung zugeführt werden
soll, ist die Vermahlung in der beschriebenen Weise,
d.h. in erwärmter Luft von ca. 100° C sehr vorteilhaft,
da die Energie eingespart wird, die bei herkömmlichen
Röst- und Veredelungsverfahren erforderlich ist, um
die Kakaomasse von der üblichen Lagertemperatur
von 40° C auf 100°C bis 130° C zu erwärmen. Hierbei
hat sich herausgestellt, daß eine nachteilige Beeinflussung
der Kakaomasse durch die verhältnismäßig hohe Temperatur
auf dem Wege von der Mahlvorrichtung bis zur Weiterverarbeitung nicht eintritt.

## Patentansprüche

1. Verfahren zur Vorvermahlung von fetthaltigen Samenkernen, insbesondere Kakaokerngut, in einer Mahlvorrichtung, aus der die Masse ausgetragen wird, dadurch gekennzeichnet, daß der Mahlvorrichtung während des Mahlens erwärmte Luft zugeführt wird, die nach Aufnahme von Feuchtigkeit und anderen leicht flüchtigen Bestandteilen wieder abgeführt wird.

2. Verfahren nach Anspruch 1, dadurch gekennzeichnet, daß die erwärmte Luft in einem Temperaturbereich zwischen 90° C und 120° C, vorzugsweise 100° C, zugeführt wird.

3. Verfahren nach Anspruch 1 oder 2, dadurch gekennzeichnet, daß die abgeführte Luft zur Vorwärmung der zuzuführenden Luft verwendet wird.

4. Verfahren nach Anspruch 1, 2 oder 3, dadurch gekennzeichnet, daß die erzeugte Masse auf dem Wege zu einer Zwischenlagerung gekühlt und diese Kühlung zur Vorwärmung der zuzuführenden Luft verwendet wird.

5. Vorrichtung zur Durchführung des Verfahrens nach einem oder mehreren der vorstehenden Ansprüche, mit einer geschlossenen Mahlvorrichtung mit einem Austrag für die gemahlene Masse, dadurch gekennzeichnet, daß eine Einrichtung vorgesehen ist, um der Mahlvorrichtung erwärmte Luft zuzuführen.

6. Vorrichtung nach Anspruch 5, dadurch gekennzeichnet, daß die Einrichtung zur Erwärmung der zuzuführenden Luft aus einem Wärmetauscher (22), dem die aus der Mahlvorrichtung abgeführte Luft als Heizmedium zugeführt wird und einer Heizeinrichtung (12) besteht.

7. Vorrichtung nach Anspruch 5 oder 6, dadurch gekennzeichnet, daß zur Erwärmung der Luft ein (weiterer) Wärmetauscher (18) vorgesehen ist, dem als Heizmedium die gemahlene Masse auf dem Wege zu einer Zwischenlagerung zugeführt wird.

8. Vorrichtung nach Anspruch 5 oder 6, dadurch gekennzeichnet, daß in der geschlossenen Mahlvorrichtung (3) oberhalb des Mahlraumes ein Abscheider (13) zum Zurückhalten von schwebenden Bestandteilen eingebaut ist.

9. Vorrichtung nach Anspruch 8, dadurch gekennzeichnet, daß der Ausgang des Abscheiders (13) in einen Entspannungs-raum (14) zur Beruhigung der austretenden Luft mündet.

0157896

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CONFECTIONERY PRODUCTION, Band 42, Nr. 11, November 1976, Seiten 502-503; L.F. DAFFEY: "Recent Bauermeister development for pre-grinding cocoa nibs" * Seiten 502-503; Abbildungen 1-3 * | 1 | A 23 G 1/10 A 23 G 1/06 |
| Y | DE-C- 114 905 (GEBR. BUEHLER) * Figuren 1,4; Anspruch 1; Seite 2, Spalte 2 * | 1,5,6 | |
| X | | 5 | |
| Y | DE-A-1 482 515 (ULTREX-CHEMIE) * Figur 1; Ansprüche 1-4; Beispiel 2 * | 1,5 | |
| X | BE-A- 421 203 (ATELIERS HEUZE MALEVEZ et al.) * Abbildungen 4,1; Seite 6, Absätze 3,4; Ansprüche 1,2,18; Seite 5 * | 1,5,6 | RECHERCHIERTE SACHGEBIETE (Int. Cl.4) A 23 G |
| Y | | 6 | |
| A | DE-C- 430 650 (A. HOPPE) | | |
| A | GB-A- 200 176 (J.W. SPENSLEY) | | |

-/-

Der vorliegende Recherchenbericht wurde für alle Patentansprüche erstellt

| Recherchenort | Abschlußdatum der Recherche | Prüfer |
|---|---|---|
| DEN HAAG | 29-01-1985 | GUYON R.H. |

Europäisches Patentamt

**EUROPÄISCHER RECHERCHENBERICHT**

0157896
Nummer der Anmeldung

EP 84 10 4108

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-2 669 924 (H. KURT WIEMER) | | |
| D,A | EP-A-0 018 607 (KUSTER WERNER) | | |
| A | BE-A- 380 777 (GEB. BUEHLER) | | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 29-01-1985 | GUYON R.H. |